Europäisches Patentamt

European Patent Office

Office européen des brevets

(19)

(11) Publication number: 0 352 144
A1

# (12) EUROPEAN PATENT APPLICATION

(21) Application number: 89307492.2

(22) Date of filing: 24.07.89

(51) Int. Cl.⁵: **A 23 J 3/00**

(30) Priority: **22.07.88 GB 8817505**
**09.11.88 EP 88202504**

(43) Date of publication of application:
**24.01.90 Bulletin 90/04**

(84) Designated Contracting States:
**AT BE CH DE ES FR GB GR IT LI NL SE**

(71) Applicant: **UNILEVER PLC**
**Unilever House Blackfriars P.O. Box 68**
**London EC4P 4BQ (GB)**

(84) Designated Contracting States: **GB**

(71) Applicant: **UNILEVER NV**
**Burgemeester s'Jacobplein 1 P.O. Box 760**
**NL-3000 DK Rotterdam (NL)**

(84) Designated Contracting States:
**BE CH DE ES FR GR IT LI NL SE AT**

(72) Inventor: **Brown, Charles Rupert Telford**
**92 Castle Road**
**Bedford MK40 3PS (GB)**

**Norton, Ian Timothy**
**29 Croft Way**
**Rushden Northants (GB)**

**Wilding, Peter**
**113 Langham Road Raunds**
**Wellingborough Northants (GB)**

(74) Representative: **Dries, Antonius Johannes Maria et al**
**Unilever N.V. Patent Division P.O. Box 137**
**NL-3130 AC Vlaardingen (NL)**

(54) **Protein product.**

(57) The present invention relates to method of preparing an aqueous composition of essentially non-aggregated colloidal particles of denatured heat-set storage protein, suitable for replacing at least part of the fat in food products, the process comprising heating an aqueous composition of insoluble undenatured heat-settable storage protein at a temperature sufficient to denature the protein and thereafter cooling below such temperature, while applying conditions of sufficient shear to prevent protein aggregation.

EP 0 352 144 A1

# Description

## PROTEIN COMPOSITION

The present invention is concerned with an aqueous composition comprising essentially non-aggregated colloidal particles of denatured protein, a method of preparing such a composition and a dry particulate composition obtained by drying such a composition.

In European patent application 0 250 623 an aqueous dispersion is described comprising colloidal non-aggregated particles of denatured whey protein coagulate having mean diameter particle size distribution when dry ranging from about 0.1 to about 2.0 microns, less than 2% exceeding 3.0 microns in diameter and the majority appearing to be spherical at about 800 power magnification. The dispersions are prepared by heating an aqueous concentrate of undenatured whey protein at heat denaturing temperatures from about 80°C to 130°C, in an aqueous solution under very high shear conditions at pH below the isoelectric point. These aqueous dispersions are said to exhibit organoleptic properties normally attributable to fat/water emulsions.

Surprisingly we have found that aqueous denatured protein compositions suitable for replacing at least part of the fat in food products are obtained by heat denaturing an aqueous composition of undenatured heat settable storage protein under conditions of sufficiently high shear to prevent aggregation of the heated denatured protein.

In one aspect of the present invention an aqueous composition of heat-settable undenatured storage protein is heated at a temperature and concentration sufficiently high to denature and aggregate the heat-settable storage protein and cooling below such temperature, at a pH at which insoluble undenatured protein particles are present, while applying conditions of sufficient shear to prevent protein aggregation. The present method offers the advantage that it uses a protein material that is widely available. Thus the present invention enables the preparation of a very interesting alternative for the whey protein based dispersions described in EP-A 0 250 623. In particular for those countries where essentially undenatured whey proteins are scarcely available, the present invention may offer a relief in that it offers the possibility of producing aqueous protein compositions, having favourable properties, without the necessity of employing whey protein.

The present composition, for instance, may suitably be incorporated in various products, due to its stability in a relatively broad pH-range. For instance a soya protein based composition may suitably be used in a pH range of 3.5 to about 8.0 without losing its advantageous rheological properties. As contrasted with the present composition, the whey protein based dispersions described in European patent application 0 250 623, when plasticity is required, may only be applied within a very limited pH-range, which severely restricts their applicability.

Yet another advantage of the present compositions is that they may be more acceptable than whey protein based dispersions to consumers who for various reasons find products unacceptable which comprise animal ingredients such as whey proteins: they may for example be less allergic to heat-settable storage proteins than to milk proteins such as whey protein.

The term heat-settable storage protein as used throughout this application is meant to encompass those said proteins of plant origin which are stored at relatively high concentration levels in particular plant tissues and which, when dissolved in water in an undenatured state and at an appropriate concentration level, are capable of forming a three dimensional gel network upon heat denaturation. Examples of suitable storage protein compositions include soya protein, rape seed protein, field bean protein, cottonseed protein and sunflower protein. Enzymatically modified proteins eg gluten, may also be suitable. Preferably the heat-settable protein in the present composition is soya protein or a fraction thereof. A slurry of such compositions for use in the process of the invention may be obtained by rendering the protein in aqueous solution insoluble by acidification in the region of the isoelectric point. Preferably the aqueous composition is processed at a pH from 3.5 to 8.0.

For particulars of the formation of protein precipitates see Bell et al "Advances in Biochemical Eng." (1983) Springer. For the effect of the slurry formation on particle size of the precipitated protein reference may be made to "Isoelectric Precipitation of Soya Protein I", Biotech. and Bioeng., 25, pp 3049-3078 (1983).

The slurry used in the present method may comprise more than one type of heat-settable storage protein. Where the slurry comprises substantial amounts of two or more heat-settable storage proteins, having iso-electric points which are substantially different, the pH of the slurry should preferably be sufficient to render insoluble at least part of the heat-settable storage protein having the highest iso-electric point.

Preferably the storage protein is upgraded in that it has been refined in that off-flavours, insoluble components and/or pigments have been substantially removed. Preferably the upgraded storage protein is virtually free from off-flavours and insoluble carbohydrates.

In order to obtain a composition having desirable rheological properties, the aqueous composition before being subjected to the heating step may contain a substantial amount of undenatured heat-settable storage protein, i.e. about 8-10% for most storage proteins, but suitable products may be made within the range 2-25 wt%. Product containing low protein concentrations may be concentrated after the shear stage of the process. During the heat treatment, upon denaturation, said heat-settable protein will tend to form a macroscopical three dimensional network. By the application of high shear, however, the formation of a three dimensional network is counteracted, resulting in a composition comprising essentially non-aggregated colloidal particles of heat-denatured storage protein. The composition may subsequently be further concentrated to obtain a plastic composition suitable for replacing fat in food products, or it may be dried to a particulate consistency.

In a preferred embodiment of the invention at least 95% of the particles of denatured storage protein have an equivalent diameter in the range of 0.1 to 30 microns, more preferably within the range of 0.1 to 10 microns.

Furthermore the heating temperature applied and duration of the heat treatment are preferably combined in such a manner that at least 80% of the undenatured heat-settable storage protein, present in the slurry before the heat treatment, is heat denatured.

The heating regime applied in the present process preferably is such that on the one hand a rapid denaturation occurs, and on the other hand relatively little off-flavour is generated. Thus preferably the slurry is heated to a temperature of at least 75°C, particularly at least 85°C, and more preferably to a temperature within the range of 90°-110°C. Suitable heating times lie within the range of 1 to 1000 seconds, more preferably in the range of 300 to 500 seconds. Preferably shorter heating times are combined with higher temperatures. Furthermore the slurry is preferably sheared at least as long as it remains at a temperature at which the formation of a macroscopical gel network could occur in the absence of shear. We have found that the present method yields products having a very favourable rheology if, subsequently to the combined heating and shearing the slurry is cooled over a temperature range of at least 5°C, while shearing to prevent aggregation. More preferably the slurry is sheared while cooling down over a temperature range of at least 30°C, said range encompassing the temperature interval of 7o°C to 50°C. The object is to cool to a temperature at which shear action may be discontinued without thereby forming a macroscopical three dimensional network, i.e. below aggregation temperature. The combined heating and shearing operation, as well as the combined cooling and shearing operation as applied in the present process, may be performed in scraped surface heat exchangers such as Votators R, high speed churns and apparatus as described in European patent application 0 250 622. Alternatively agitator equipment e.g. Ultra Turrax fitted with homogenising head may be used. The effectiveness of shear equipment may be gauged by reference to its rate of displacement in use. For a smooth rotor device this may be determined by standard calculation from the dimensions of the rotor radius, its speed and gap separation from the vessel in which it operates. For such devices the displacement rate should be at least 2000 secs$^{-1}$. In other cases a suitable shear rate may be determined by the observed particle size of the product.

In a preferred embodiment of the present method the slurry is formed by admixing undenatured heat-settable storage protein and water so as to obtain a weight ratio of undenatured heat-settable storage protein to water in the range of 1:3 to 1:50. If ratios outside this range are applied either extremely high shear has to be applied, or much water needs to be removed before further application of the composition obtained by the method.

Another aspect of the present invention is an aqueous composition comprising essentially non-aggregated colloidal particles of denatured heat-set storage protein, at least 95% of the colloidal particles having an equivalent diameter in the range of 0.1 to 30 microns, more preferably in the range of 0.1 to 20 microns. Most preferably at least 98% of the particles of heat denatured storage protein have an equivalent diameter in the range of 0.4 to 10 microns. These may be obtained by suitable manipulation of the process parameters of the invention and exhibit mouth feel comparing favourably with fat/water emulsions for which they may provide at least in part an effective low calorie substitute.

Fat replacement compositions according to the invention may be based entirely on heat-settable storage protein and then exhibit an excellent quality. Products of comparable quality may also be obtained, however, if mixtures of heat-settable storage proteins with additional, essentially undenatured protein, e.g. of whey egg-albumin and/or blood albumin are used in the process of the invention. The present application therefore also encompasses compositions additionally comprising gel forming proteins other than heat-settable storage proteins. Depending on the method of preparation and the ingredients used, small amounts of other components may be incorporated in the colloid products of the invention. In general, less than 40 wt.%, more preferably less than 20 wt.% of other components may be present.

The compositions of the invention display rheological properties very suitable for use in compositions, in particular food products, as a fat replacer and in or as a substitute for fat-and-water emulsions, e.g. butter, margarine, low fat spreads, creams, mayonnaise, ice cream, confectionery including chocolate compositions and frozen desserts generally. In order to obtain the desired plasticity and firmness, the present composition, in general, should preferably comprise 5-30 wt.%, more preferably 8-25 wt.% of heat-settable storage protein.

In the present composition part of the heat-settable storage protein may be present in an undenatured state. Preferably, however, at least 90% of the heat settable storage protein, as present in the composition according to the invention, is denatured. A suitable method for determining the degree of denaturation of the heat-settable storage protein in the present composition is Differential Scanning Calorimetry.

The equivalent diameter distribution of the colloidal denatured storage protein particles may suitably be established from microscopical images. Although such may be done by hand, in order to obtain more reproducible results the particle size distribution may be determined by means of an image analyzing computer. Of course the magnification applied should be suitable for properly determining the equivalent diameter distribution. For determining the diameter-distribution in the range of 0.1 to 30 microns in the present compositions a magnification of x800 appeared to be appropriate. Particle size may also be determined by light scattering methods using e.g. Malvern Mastersizer equipment.

It may be advantageous to dry the present composition to a dry particulate composition so as to facilitate transportation and storage. Such a dry particulate composition may be admixed with water at any stage so as to obtain a reconstituted composition according to the present invention.

Thus another aspect of the present invention is a dry particulate composition comprising essentially non-aggregated particles of denatured storage protein, obtained by drying a composition according to the present invention to a water content of less than 20 wt.%, more preferably less than 10 wt.%. The particulate composition according to the invention preferably possesses the characteristics of a free flowing powder.

Any suitable technique may be used to dry the composition according to the invention to obtain the present particulate composition. Examples of suitable techniques are freeze drying, vacuum drying and spray drying.

The products of the invention may be stabilised against bacteriological contamination by the addition of appropriate amounts of conventional stabilisers e.g. potassium sorbate.

The present invention is further illustrated by means of the following examples:

Example 1

A heat set protein macro-colloid dispersion was manufactured from soya protein as follows.

A solution of soya protein was made by dispersing 500g of soya concentrate (Newpro, T. Lucas Ingredients Ltd. Bristol) in 5 litres of distilled water containing 16g of potassium sorbate as an antimicrobial agent. The dispersion of the flour into the water was achieved by mixing with a Silverson Laboratory Mixer/Emulsifier operating at maximum speed. When the flour was adequately dispersed the mixing was continued for a further 20 minutes to ensure maximum dissolution of the soya proteins. Insoluble material was then removed by centrifuging at 8000-9000 x g for 20 minutes. The supernatant (3-4 litres) containing 4.6g of soluble protein per 100 ml was decanted and 1 litre transferred to a vigorously stirred vessel. The pH of this solution was then titrated with 5M hydrochloric acid to pH 5.0 to bring about precipitation of the protein. The acid was added dropwise over a period of about 5 minutes to prevent localised high acid concentrations which may result in the formation of large protein precipitate aggregates. The vigorous stirring was employed to minimise the aggregation of the precipitated protein (cf Bell et al "Advances in Biochemical Eng." (1983). This treatment resulted in a dispersion or slurry of precipitated protein particles having a mean size of 6.9 microns when measured with a Malvern Mastersizer. 600 ml of the slurry was transferred to a Janke and Kunkel DK45 jacketed vessel into which a Janke and Kunkel Ultraturrax model T50 fitted with a 045F homogenising head was inserted. The slurry was then sheared by running the Ultraturrax at maximum rotor speed which results in a circumferential rotor speed of 20.9 m/sec. The temperature of the slurry was controlled by circulating Haake Synth-210 bath fluid, heated in a Haake F4 water bath, through the jacket of the glass vessel. Whilst being sheared the temperature of the slurry was raised to 95 C and held at this temperature for 8 minutes to maximise the amount of protein denatured. The slurry was then cooled, whilst still applying shear, to 29 C. The resulting particulate dispersion of heat set protein was then concentrated by centrifuging at about 2000 x g to give a product of paste-like consistency. At this stage the product contained 76% water. The product was shown not to contain significant amounts of undenatured protein by Differential Scanning Calorimatric analysis (as per the technique described by Lund, D.B. in "Physical Properties of Foods", 1983). The mean size of the protein particles in the product was found by analysis with the Malvern Mastersizer to be 4.8 microns. The product displayed plastic flow behaviour when compressed. A measure of the plastic behaviour of the product was obtained by compressing a 10mm diameter cylinder of product at 10mm /minute to 70% of its original size and comparing the permanent deformation to the applied deformation. In this comparison an elastic material will have a ratio of permanent to applied deformation approaching zero and a plastic material will have a value approaching 1. The product was found to have a value of 0.8 confirming its plastic nature. When tasted the product had a fatty mouthfeel.

Example 2

A solution of soya protein was made by the method of example 1. Insoluble material was removed by centrifugation (30 min., 10,000 x g). The clarified extract was decanted and titrated to pH 4.8 using HC1 (5M) under the conditions described in Example 1. The final slurry of precipitated storage protein contained protein particles with an average size of 10.4 micron (Malvern Mastersizer). The slurry was allowed to stand without agitation until the precipitated protein formed a sediment of about 10% solids. The supernatant liquor was decanted and the remaining protein sediment used for subsequent processing.

A high speed churn comprising a jacketed, cylindrical barrel with a smooth surface fitted with a smooth surfaced rotor and having an annular gap of 2mm., was connected directly to a scraped surface heat exchanger (A-unit). The high speed churn jacket temperature was set to 96 deg. C and the A-unit jacket temperature was set to 12 deg. C. The units were energised and the churn operated at 6000 rpm and the A-unit at 1000 rpm. At these speeds, the rate of material displacement in the churn was calculated to be 5655 secs$^{-1}$ and 12000 secs$^{-1}$ in the A unit. The protein slurry was preheated to 30° C and then pumped through the combination unit at a throughput of 50 g/mon. At this throughput, the residence times were 180 secs and 13 secs respectively. The resulting macro-colloidal dispersion emerged from the process at 26°C and had a paste-like consistency, displaying plastic flow behaviour when compressed. The mean size of the particles was measured to be 11.8 micron by Malvern Mastersizer. The product was shown by Differential Scanning Calorimeter analysis to have a substantial amount of the storage protein in the heat denatured state. On tasting, the product was found to have a fatty mouthfeel reminiscent of an emulsion and a pronounced beany taste.

Example 3

A zero fat ice confection was made from the following ingredients.

|  | % |
|---|---|
| Water | 63 |
| Milk protein (38% protein) | 11.0 |
| Added sugars | 17.3 |
| Stabilisers (locus bean gum & carrageenan) | 0.16 |
| Flavour (vanillin) | 0.01 |
| Soya protein macro-colloid prepared as described in Example 1 (24% solids) | 8.0 |

The ingredients were combined together in a manner usual to manufacture a standard ice-cream. The mixture pasteurised at 85°C for 15 seconds prior to ageing, freezing to -4°C and forming into 0.5 litre blocks. The blocks were then hardened at -30°C to obtain an ice confection product with textural characteristics reminiscent of a conventional fat content ice-cream.

Example 4

100 parts of a low fat spread containing 40% fat phase with added emulsifiers of monoglyceride and lecithin and 60% aqueous phase containing salt and potassium sorbate were mixed with 48 parts of a soya protein macrocolloid (24% solids) prepared as described in Example 1 in a low shear batch mixer at 15°C. The resulting reduced fat spread had a fat content of 27%.

The 27% fat reduced fat spread showed good spreading properties with no water loss and had the appearance and mouth response of a 40% fat spread.

Example 5

A product was made from sunflower seed protein as follows.

1kg of sunflower kernels was size reduced with a Moulinex Brevette GGDG Type 505 food processor and extracted exhaustively with hexane to remove lipid. 100g of the resulting dry powder was dispersed in 1 litre of distilled water and mixed for 20 minutes with a Silverson Laboratory mixer/emulsifier. The mixture was centrifuged at 8600 x g for 20 minutes to remove insoluble material. 600 ml of the clarified total water extract, containing 1.6 g protein per 100 ml, was adjusted to pH 5.0 with 5M hydrochloric acid in order to precipitate the sunflower protein. The mean size of the heat-settable sunflower protein particles was 3.3 microns measured by Malvern Mastersizer. The material was then treated in an identical manner to that described in Example 1. After the heat/shear process and concentration by centrifugation a product containing 16.6 g solid per 100 g and a mean particle size of 2.6 microns was obtained. This product displayed plastic flow behaviour when compressed and had a fatty mouthfeel.

**Claims**

1. Process for preparing denatured unaggregated protein suitable for replacing at least part of the fat contained in food products, the process comprising heating an aqueous composition of undenatured heat-settable storage protein at a temperature and concentration sufficient to denature and aggregate the protein and thereafter cooling below such temperature and at a pH at which insoluble undenatured protein particles are present while applying conditions of sufficient shear to prevent protein aggregation.

2. Process according to claim 1 wherein the aqueous composition comprises an aqueous slurry of upgraded substantially undenatured storage protein.

3. Process according to claim 1 or 2 wherein the shear conditions applied are provided at a rate of displacement of at least 2000 secs$^{-1}$.

4. Process according to claim 1, 2 or 3, wherein the aqueous composition is cooled under shear over a temperature range of at least 5°C.

5. Process according to any of the preceding claims wherein the pH is from 3.5 to 8.0.

6. Process according to any of the preceding claims wherein the aqueous composition is heated to a temperature of at least 75°C.

7. Process according to claim 6 wherein the aqueous composition is heated to a temperature within the range 90-110°C. 8. Process according to any of the preceding claims wherein the weight ratio of undenatured heat-settable storage protein to water is in the range of 1:3 to 1:50.

9. Process according to any of the preceding claims wherein shear is applied for a period from 300 to 500 seconds.

10. Process according to any of the preceding claims, wherein the upgraded storage protein is essentially free from off-flavours and insoluble carbohydrates.

11. Composition comprising an aqueous dispersion of non-aggregated denatured heat-set storage protein colloidal particles at least 95% of which have an equivalent diameter in the range of 0.1 to 30 microns.

12. Composition according to claim 11, wherein at least 95% of said particles have an equivalent diameter in the range of 0.1 to 20 microns.

13. Composition according to preceding claim 11 or 12 having a pH of from 3.5 to 8.0.

14. Composition according to any one of claim 11, 12 or 13, wherein the storage protein comprises soya, rape seed, field bean, cottonseed or sunflower protein, or a fraction thereof.

15. Composition according to claim 11, 12 or 13 wherein the storage protein comprise gluten protein or enzymatically modified protein.

16. Composition according to any of the preceding claims 11 to 15 which comprises up to 30 wt% of the said heat set storage protein.

17. Composition according to any of the preceding claims which further comprises additional gel-forming proteins.

18. Particulate composition according to any one of claims 11 to 17 having a water content of less than 20 wt%.

19. Food composition according to claim 18 which further comprises an emulsified composition.

20. Margarine and like emulsions food spreads as claimed in claim 19.

# EUROPEAN SEARCH REPORT

**European Patent Office**

**Application Number**

EP 89 30 7492

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | EP-A-0 250 623 (J. LABAT LTD) * Claims 1-3,14,18,36,47; page 12, lines 25-33; example 1 * | 11-13 | A 23 J 3/00 |
| D,Y | | 14,18-19 | |
| D,A | | 1-3,5-7,9 | |
| Y | US-A-4 209 503 (S.M.M. SHAH) * Claim 1; columns 3-4; column 7, lines 25-35 * | 14,18-19 | |
| A | BIOTECHNOLOGY AND BIOENGINEERING, vol. 24, no. 8, 1982, pages 1897-1900, Johy Wiley & Sons, Inc., US; M.Y.Y. CHAN et al.: "The relationship between the Zeta potential and the size of soya protein acid precipitate particles" | | |
| A | A.K. SMITH et al.: "Soybeans: Chemistry and Technology", vol. 1, 1972, page 100, The AVI Publishing Co., Inc., Westport, Connecticut, US | | TECHNICAL FIELDS SEARCHED (Int. Cl.5) A 23 J |
| A | BIOTECHNOLOGY AND BIOENGINEERING, vol. 25, no. 12, 1983, pages 3059-3078, John Wiley & Sons, Inc., US; A.M. PETENATE et al.: "Isoelectric precipitation of Soy protein. II. Kinetics of protein aggregate growth and breakage" | | |

The present search report has been drawn up for all claims

| Place of search | Date of completion of the search | Examiner |
|---|---|---|
| THE HAGUE | 20-10-1989 | SANTOS Y DIAZ A.I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)